# EUROPÄISCHE PATENTSCHRIFT

(11) **EP 0 875 978 B1**
(45) Veröffentlichungstag und Bekanntmachung des Hinweises auf die Patenterteilung: **21.03.2007**
(21) Anmeldenummer: 97107302.8
(22) Anmeldetag: 02.05.1997
(51) Int. Cl.: H02J 7/02

(54) **Akkumulator-betriebenes Gerät**
Battery-powered apparatus
Appareil fonctionnant sur batterie

(43) Veröffentlichungstag der Anmeldung: 04.11.1998
(73) Patentinhaber: EM Microelectronic-Marin SA, 2074 Marin (CH)
(72) Erfinder: Descombes, Arthur, 3210 Kerzers (CH); Bruelhart, Marcel, 1588 Cudrefin (CH)
(74) Vertreter: Ravenel, Thierry Gérard Louis

(56) Entgegenhaltungen:
- CH-A- 656 987
- US-A- 4 220 872
- US-A- 4 639 656
- PATENT ABSTRACTS OF JAPAN vol. 16, no. 550 (E [1292] , 19.November 1992 & JP 04 207929 A (FUJITSU), 29.Juli 1992,

## Beschreibung

Die Erfindung betrifft ein mit einem wiederaufladbaren Akkumulator betriebenes Gerät nach dem Oberbegriff des Anspruchs 1.

Dieses Gerät kann beispielsweise ein netzunabhängig betreibbares Gerät wie etwa ein Zahnpflegegerät, insbesondere eine elektrische Zahnbürste, ein Rasierapparat, ein Haarpflegegerät, ein Telefon, ein Küchenkleingerät, oder dergleichen sein.

In der DE 40 22 642 ist zum Beispiel eine akkubetriebene elektrische Zahnbürste sowie ein dazugehörendes Ladegerät gezeigt, wobei letzteres Mittel zur symmetrischen Begrenzung der Ausgangswechselspannung aufweist, um die Korrosionsanfälligkeit der Anschlusskontakte zwischen Ladegerät und Zahnbürste herabzusetzen. Die Zahnbürste weist lediglich einen Akkumulator, einen Motor zum Antrieb der Bürste, einen Schalter zum Ein- und Ausschalten des Motors sowie eine Diode auf.

Bei der CH 656 987 hingegen ist eine kontaktlose Energieübertragung vom ortsfesten Ladegerät zum Handgerät vorgesehen, wobei das Ladegerät eine Speisung zur Erzeugung einer hochfrequenten Wechselspannung aufweist, während das Handgerät wiederum einfach aufgebaut ist und nebst einer Sekundärwicklung und einem Akkumulator lediglich Gleichrichter- und Zenerdioden aufweist.

Bei beiden Lösungen stellt das Ladegerät der Zahnbürste zur Ladung des Akkumulators eine Spannung zur Verfügung, die sich dem Ladezustand des Akkumulators anpasst, d.h. der Akkumulator zieht die Ladespannung herunter. Die Ladespannung ist umso geringer, je weniger Zellen der Akkumulator aufweist, je niedriger die Nennzellenspannung ist und je stärker der Akkumulator entladen ist. Beispielsweise beträgt die Ladespannung einer bereits geladenen NiCd-Zelle etwa 1.5V, während sie im stark entladenen Zustand unter 0.5V sinken kann.

Falls die Zahnpflegegeräte der obengenannten Dokumente beispielsweise mit nur einer Akkumulatorzelle ausgerüstet sind, steht beim Laden dementsprechend auch nur eine geringe Spannung zur Verfügung. In beiden Fällen ist also keine Möglichkeit gegeben, nebst dem Akkumulator eine weitere Last, wie beispielsweise eine elektronische Schaltung, mit einer ausreichend hohen und mindestens näherungsweise konstanten Spannung zu versorgen. Beispielsweise ist es kaum möglich, diese Zahnplegegeräte mit einer Ladeanzeigeschaltung zu versehen, da die dazu notwendige Speisespannung während dem Ladevorgang nicht verfügbar ist.

Der vorliegenden Erfindung liegt daher die Aufgabe zugrunde, insbesondere auch während dem Ladevorgang des Akkumulators zusätzliche Lasten mit einer ausreichend hohen und konstanten Speisespannung zu versorgen.

Die erfindungsgemässe Lösung dieser Aufgabe ergibt sich aus den Merkmalen des Anspruchs 1.

Vorteilhafte Ausführungsformen gehen aus den abhängigen Ansprüchen hervor.

Das erfindungsgemässe Gerät weist gegenüber dem Stand der Technik den Vorteil auf, dass während dem Ladevorgang, nebst dem zu ladenden Akkumulator, der aus der Sicht der Speisung eine niederohmige Last darstellt, eine hochohmige zweite Last mit einer konstanten und genügend hohen Spannung versorgt werden kann.

Dies wird einerseits dadurch erreicht, dass eine Diode und ein Kondensator eine Serieschaltung bilden, die an der von der Ladevorrichtung abgegebenen Spannung liegt, wobei die Diode in Durchlassrichtung angeordnet ist, und anderseits dadurch, dass ein elektronischer Schalter alternierend für kurze Zeit den Ladevorgang des Akkumulators unterbricht, um die Ladevorrichtung zu entlasten, deren Spannung ansteigen zu lassen und den Kondensator zu laden. Die Diode schützt den Kondensator vor Entladung durch den Akkumulator oder die Ladevorrichtung.

Die erfindungsgemässe Lösung ermöglicht auf sehr kostengünstige Weise die Stromversorgung einer im Vergleich zum Akkumulator hochohmigeren, weiteren Last. Selbstverständlich können auch mehrere Lasten vom Kondensator gespeist werden. Der Kondensator ist unter anderem derart auszulegen, dass die Spannung während seiner Entladung, d.h. während der Ladeperiode des Akkumulators, nur im zulässigen Rahmen fällt. Weiter kann die Ladezeit des Kondensators und ebenso die Anzahl Ladeperioden pro Zeiteinheit variiert werden. Entsprechende Berechnungen zur Festlegung der Kapazität des Kondensators sowie der Schaltzeiten t1 und t2 gehören zum gewöhnlichen Betätigungsfeld des Fachmannes und brauchen deshalb nicht erläutert werden.

Die Erfindung ist nachfolgend im Sinne eines nicht ausschliessenden Beispiels anhand einer elektrischen Zahnbürste erläutert, wobei auf die Zeichnungen Bezug genommen wird. Es zeigen:
- Figur 1 ein vereinfachtes, elektrisches Schema einer mit einem wiederaufladbaren Akkumulator betriebenen, elektrischen Zahnbürste gemäss der Erfindung und
- Figur 2 verschiedene Spannungsverläufe der erfindungsgemässen Zahnbürste von Figur 1.

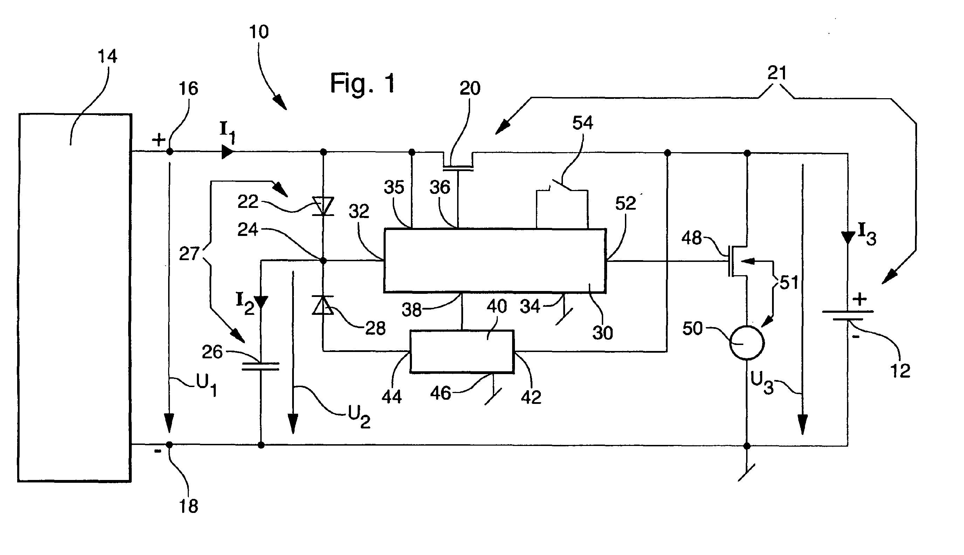

In Fig. 1 ist ein erfindungsgemässes, Akkumulator-betriebenes Gerät in Form einer elektrischen Zahnbürste 10 mit einem aus einer Zelle bestehenden Akkumulator 12 gezeigt. Der elektrische Zahnbürste 10 ist eine netzgespeiste Ladevorrichtung zugeordnet, die in Figur 1 lediglich durch eine mit Speisung 14 bezeichnete, elektrische Energiequelle dargestellt ist. Nicht dargestellt sind unter anderem die Netzanschlüsse sowie die Übertragungsmittel zwischen Ladevorrichtung und Zahnbürste, sei dies in Form von Steckkontakten, wie in DE-40 22 642, oder mittels induktiver Übertragung, wie in CH-656 987.

Die Speisung 14 ist mindestens zeitweise im wesentlichen als Stromquelle betreibbar, weist einen entsprechend hochohmigen Innenwiderstand auf und gibt eine lastabhängige Ladespannung U1 sowie einen Ladestrom I1 an die Zahnbürste 10 ab, wobei die Ladespannung U1 in der Zahnbürste zwischen einem positiven 16 und einen negativen Punkt 18 liegt. Die Ladespannung U1 entspricht einer Gleichspannung, deren Verlauf konstant oder variabel sein kann, d.h. gleichförmig oder ungleichförmig. Beispielsweise kann sie auch eine Sinus-Halbwellen-Form aufweisen.

Der positive Punkt 16 führt auf den Drain-Anschluss eines MOS-Feldeffekt-Transistors 20 zum Ein- und Ausschalten des Ladevorganges, dessen Source-Anschluss weiter auf den positiven Anschluss des Akkumulators 12 führt. Der negative Anschluss des Akkumulators 12 ist mit de negativen Punkt 18 der Speisung 14 verbunden. Die Source-Source-Strecke des MOS-Feldeffekt-Transistors 20 bildet mit dem Akkumulator 12 eine Serieschaltung 21.

Der Akkumulator 12 weist eine Gleichspannung auf, die mit Akkumulatorspannung U3 bezeichnet ist, und entspricht aus der Sicht der Speisung 14 einer niederohmigen, ersten Last.

Der positiven Punkt 16 ist ausserdem mit der Anode einer Diode 22 verbunden, dessen Kathode auf einen Knoten 24 führt. Mit diesem Knoten 24 in Verbindung stehen ausserdem der eine Anschluss eines Kondensators 26 sowie die Kathode einer weiteren Diode 28. Der andere Anschluss des Kondensators 26 steht mit dem negativen Punkt 18 in Verbindung. Die Diode 22 und der Kondensator 26 bilden somit eine mit 27 bezeichnete Serieschaltung. Über dem Kondensator 26 bzw. zwischen dem Knoten 24 und dem negativen Punkt 18 liegt eine Gleichspannung, die Kondensatorspannung U2 genannt wird. Der Lade- oder Entladestrom des Kondensators 26 ist mit 12 bezeichnet.

Weiter ist eine Steuereinheit 30 über ihren positiven Speiseeingang 32 mit dem Knoten 24 verbunden, während ihr negativer Speiseeingang 34 auf den negativen Punkt 18 führt. Die Steuereinheit 30 weist einen Eingang 35 auf, der mit dem positiven Punkt 16 verbunden ist, sowie einen Ausgang 36, der am Gate-Anschluss des MOS-Feldeffekt-Transistors 20 angeschlossen ist. Ein weiterer Ausgang 38 steht mit einem Spannungs-Vervierfacher 40 in Verbindung.

Dieser Spannungs-Vervierfacher 40 weist einerseits einen Eingang 42 auf, der auf den positiven Anschluss des Akkumulators 12 führt, sowie einen Ausgang 44, welcher an der Anode der Diode 28 angeschlossen ist. Auch der Spannungs-Vervierfacher 40 ist über einen negativen Speiseeingang 46 mit dem negativen Punkt 18 verbunden.

Parallel zum positiven und zum negativen Anschluss des Akkumulators 12 ist eine Serieschaltung 51 angeordnet, welche einen MOS-Feldeffekt-Transistor 48 und einen Motor 50 umfasst, d.h. der Drain-Anschluss des MOS-Feldeffekt-Transistors 48 ist mit dem positiven Anschluss des Akkumulators 12 verbunden, sein Source-Anschluss führt auf den einen Anschluss des Motors 50 und der andere Anschluss des Motors 50 ist an den negativen Punkt 18 der Speisung 14 angeschlossen. Der Lade- oder Entladestrom des Akkumulators 12 ist mit I3 bezeichnet.

Der Gate-Anschluss des MOS-Feldeffekt-Transistors 48 führt auf einen Ausgang 52 der Steuereinheit 30. Weiter ist ein Schalter 54 zur Inbetriebnahme des Motors 50 mit der Steuereinheit 30 verbunden, welcher im folgenden Motorschalter genannt wird.

Die Steuereinheit 30 weist verschiedene, in der Figur 1 nicht dargestellte Komponenten auf. Beispielsweise ist ein Kapazitätszähler vorgesehen, der über den Ladezustand des Akkumulators 12 informiert. Ebenfalls nicht gezeigt sind zwei Spannungs-Verdoppler, die jeweils zur Ansteuerung der Gates der beiden MOS-Feldeffekt-Transistoren 20 und 48 dienen und deren Ausgänge den Ausgängen 36 bzw. 52 der Steuereinheit 30 entsprechen. Weiter verfügt die Steuereinheit 30 über eine Zeitbasis, welche die Durchschaltung und Blockierung des MOS-Feldeffekt-Transistors 20 steuert.

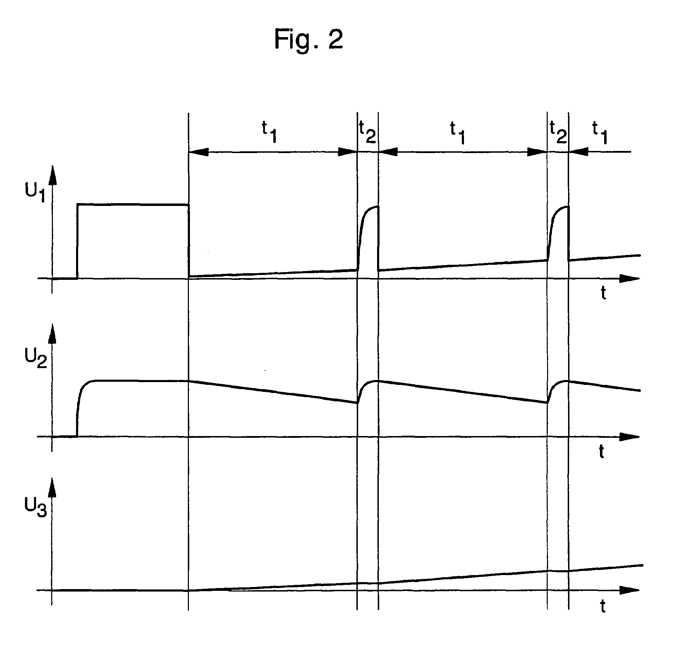

Die nun folgende Beschreibung der Funktionsweise der erfindungsgemässen Zahnbürste 10 erfolgt in Bezugnahme auf Fig.1 und 2 und bezieht sich auf folgende Aufgangslage, wobei auch hier alle Angaben nur im Sinne eines Beispieles zu verstehen sind:
- Die Zahnbürste 10 befindet sich im Ladegerät,
- der Motorschalter 54 wird nicht betätigt,
- der Akkumulator 12 ist vollständig entladen,
- der Kondensator 26 ist vollständig entladen,
- der MOS-Feldeffekt-Transistor 20 befindet sich im Sperrzustand und
- der MOS-Feldeffekt-Transistor 48 befindet sich im Sperrzustand.

Die Speisung erzeugt intern eine Leerlaufspannung von 9V, jedoch limitiert eine in Figur 1 nicht dargestellte Zenerdiode die Speisespannung U1 auf 6.8V. Da die Diode 22 in Durchlassrichtung gepolt ist, wird der Kondensator 26 aufgeladen, so dass die Kondensatorspannung U2 am Knoten 24 von 0V bis auf ungefähr 5V ansteigt. Dadurch liegt der positive Speiseeingang 32 in kurzer Zeit an einer ausreichend hohen Speisespannung und die Steuereinheit 30 kann ihre Funktion aufnehmen. Die Kondensatorspannung U2 ist aufgrund der relativ hohen Schaltfrequenz des MOS-Feldeffekt-Transistors 20 U1 und der Kapazität der Diode 22 um mehr als 0.7V, d.h. um fast 2V geringer als die Speisespannung U1, wobei hier von Mittelwerten ausgegangen wird.

Die Steuereinheit 30 steuert den MOS-Feldeffekt-Transistor 20 über den Ausgang 36 mit einer relativ hohen Spannung von etwa 10V an, um einen geringen Drain-Source-Durchgangswiderstand R_{DSon} von etwa 1.5Ohm zu erzielen. Die gegenüber der Kondensatorspannung U2 ungefähr doppelt so hohe Spannung von 10V wird vom bereits erwähnten, jedoch nicht dargestellten Spannungs-Verdoppler der Steuereinheit 30 erzeugt.

Solange die Akkumulatorspannung U3 0.7V nicht übersteigt, bleibt eine durch Betätigung des Motorschalters 54 auslösbare Inbetriebnahme des Motors 50 blockiert.

Der nun leitende MOS-Feldeffekt-Transistor 20 setzt den Ladevorgang des Akkumulators 12 in Gang, wobei der Akkumulator-Ladestrom I3 der Speisung 14 etwa 200mA beträgt, am MOS-Feldeffekt-Transistor 20 ein Spannungsabfall von ungefähr 0.3V entsteht und die Speisespannung U1 nahezu vollständig heruntergerissen wird. Da die Kondensatorspannung U2 des Knotens 24 die Speisespannung U1 deutlich übertrifft, befindet sich die Diode 22 nun in Sperrpolung und verhindert die Entladung des Kondensators 26 über den Akkumulator 12.

Der Kondensator 26 speist die Steuereinheit 30 und wird dabei entladen, wobei seine Kapazität so bemessen ist, dass die Kondensatorspannung U2 in Abhängigkeit des vorliegenden Eingangswiderstandes des positiven Speiseeinganges 32 nur im zulässigen Rahmen sinkt, wie dies aus dem U2-Verlauf von Fig.2 ersichtlich ist. Eine störfreie Funktion der Steuereinheit 30 ist bis zu einer Spannung von 1.2V gewährleistet.

Durch die in der Steuereinheit 30 enthaltene Zeitbasis wird der MOS-Feldeffekt-Transistor 20 200ms nach dem Einschalten wieder ausgeschaltet und somit der Ladevorgang des Akkumulators 12 unterbrochen. Die Einschaltdauer des MOS-Feldeffekt-Transistors 20 von 200ms wird mit Zeitintervall t1 bezeichnet, wie es aus der Figur 2 hervorgeht. Durch die Entlastung der Speisung 14 schnellt die Speisespannung U1 zurück auf 6.8V und der Ladevorgang des Kondensators 26 über die Diode 22 setzt erneut ein. Die Zeitbasis der Steuereinheit 30 beschränkt die Ladedauer des Kondensators 26 auf 2ms. Diese Zeitspanne wird Zeitintervall t2 genannt, wie es ebenfalls aus der Figur 2 ersichtlich ist.

Anschliessend steuert die Steuereinheit 30 den MOS-Feldeffekt-Transistor 20 an, um die Wiederaufnahme des unterbrochenen Ladevorganges des Akkumulators 12 erneut für die Dauer des Zeitintervalles t1 zu bewirken. Nach Ablauf des Zeitintervalles t1 folgt wiederum während der Zeitspanne t2 die Deckung des zwischenzeitlich entstandenen Ladungsverlustes des Kondensators 26.

Der Ladevorgang des Akkumulators 12 während t1 und der Ladevorgang des Kondensators 26 während t2 wechseln sich fortlaufend ab, wobei Versuche gezeigt haben, dass die kurzen Ladeunterbrüche des Akkumulators 12 keinen negativen Einfluss auf seine Kapazität, die Lebensdauer oder andere Grössen haben.

Diese periodisch durchgeführte Kompensation der Ladung des Kondensators 12 wird vom Anmelder "refreshing" genannt, da der Ladezustand gewissermassen aufgefrischt wird, und bildet einer der Kernpunkte der vorliegenden Erfindung.

In der Fig.2 ist der Anstieg der Ladespannung U1 in übertriebenen Mass gezeigt, damit mit zunehmender Akkuspannung U3 deutlich wird, dass die Ladespannung U1 weniger stark heruntergerissen wird.

Selbstverständlich ist das Zeitintervall t1 derart zu bemessen, dass die Kondensatorspannung U2 bei weitem nicht auf die minimal zulässigen 1.2V fällt. Auch muss das Zeitintervall t2 genügend gross sein, um jeweils eine vollständige Ladung des Kondensators 26 zu ermöglichen. Mit einer Kapazität von 4uF des Kondensators 26 wird die kritische Kondensatorspannung U2 erst nach zehn Sekunden erreicht.

Der Ladezustand des Akkumulators 12 wird von der Steuereinheit 30 indirekt ermittelt, indem der Zustand des beim Laden inkrementierten beim Entladen dekrementierten Kapazitätszählers abgefragt wird.

Da die Gefahr besteht, dass der Zustand des Kapazitätszählers nicht genau mit dem tatsächlichen Ladezustand des Akkumulators 12 übereinstimmt, beispielsweise, weil der Benützer den Motor 50 stärker belastet, als ursprünglich angenommen, ist nach jedem Entladevorgang ein leichtes Überladen des Akkumulators 12 vorgesehen. Dieses leichte Überladen wird dadurch erreicht, indem der Kapazitätszähler grundsätzlich immer von einem grossen Entladestrom I3 ausgeht, selbst wenn der Motor 50 kaum belastet wird. Dabei ist der Ladestrom I3 derart bemessen, dass der Akkumulator 12 bei Überladung keinen Schaden nimmt. Ein Ladestrom I3 von 100mA beispielsweise ist durchaus zulässig. Dabei tritt auch kein allmählich auftretender Kapazitätsverlust des Kondensators 12 auf.

Bis anhin wurde davon ausgegangen, dass sich die elektrische Zahnbürste dauernd im ortsfesten, in Figur 1 nicht dargestellten Ladegerät befindet und die Speisung 14 beispielsweise über einen Transformator mit dem Netz in Energieübertragungs-Verbindung steht.

Für die folgende Beschreibung wird nun angenommen, dass der Akkumulator 12 bei einer Entnahme der elektrischen Zahnbürste 10 aus dem Ladegerät bereits vollständig geladen ist und sich der MOS-Feldeffekt-Transistor 20 im Sperrzustand befindet. Die Steuereinheit 30 registriert über den Eingang 35, dass die Speisespannung U1 weggefallen ist und setzt über den Ausgang 38 des auch als Spannungspumpe bezeichneten Spannungs-Vervierfachers 40 in Betrieb.

Der Spannungs-Vervierfacher 40 vervierfacht die an seinem Eingang 42 liegende Akkumulatorspannung U3 von 1.45V auf eine Spannung von 5.8V, welche über seinen Ausgang 44 an den Knoten 24, d.h. an den positiven Speiseeingang 32 der Steuereinheit 30 abgegeben wird. Diese Spannungsrückführung ist notwendig, da die Kompensation der Entladung des Kondensators 26 durch die Speisung 14, wie erwähnt, nicht mehr erfolgt.

Betätigt der Benützer den Motorschalter 54, schaltet die Steuereinheit 30 mittels des in Figur 1 nicht dargestellten Spannungs-Verdopplers über den Ausgang 52 den MOS-Feldeffekt-Transistor 48 ein, wodurch die Entladung des Akkumulators 12 über den Motor 50 einsetzt.

Bei einer Akkumulatorspannung U3 von 0.7V erzeugt der Spannungs-Vervierfacher 40 an seinem Ausgang 44 2.8V, von welchen 0.7V über der Diode 28 abfallen, so dass die Steuereinheit 30 mit einer Spannung U2 von etwa 2.1V gespeist wird. Bei einer Spannung U2 von 2.1V erzeugen die beiden nicht gezeigten Spannungs-Verdoppler der Steuereinheit 30 an den Gates der MOS-Feldeffekt-Transistoren 20 und 48 noch etwas mehr als 4V, wodurch immer noch ein zufriedenstellend tiefer Drain-Source-Durchgangswiderstand R_{DSon} von unter 30hm gewährleistet ist.

Sollte sich die elektrische Zahnbürste 10 während langer Zeit nicht im Ladegerät befinden und die Selbstentladung voranschreiten, kann die Funktion der Steuereinheit 30 bis zu einer Akkumulatorspannung U3 von 0.45V aufrechterhalten werden, da der Spannungs-Vervierfacher in diesem Fall an seinem Ausgang 44 noch 1.8V erzeugt, von welchen 0.6V über der Diode 28 abfallen, so dass die Steuereinheit 30 mit einer kleinstzulässigen Spannung von etwa 1.2V gespeist wird.

Sollte der Benützer den Motor 50 blockieren, schaltet die Steuereinheit 30 den MOS-Feldeffekt-Transistor 48 nach 4 Sekunden selbsttätig ab.

Zwecks Begrenzung des Ladestromes I2 des Kondensators 26 kann es sinnvoll sein, in Serie zu letzterem einen Widerstand vorzusehen.

Allenfalls kann eine direkte Verbindung zwischen dem Akkumulator 12 und der Steuereinheit 30 vorgesehen werden, damit letztere den Ladezustand direkt überwachen kann.

Selbstverständlich können der Serieschaltung 27 zwischen Kondensator 26 und Diode 22 auch weitere Element hinzugefügt werden, wie etwa ein Widerstand zur Ladestrom-Begrenzung des Kondensators 26.

Obwohl in Figur 1 der positiven Punkt 16 auf die Diode 22 führt, ist es beispielsweise auch möglich, dass der Punkt 16 direkt mit dem einen Anschluss des Kondensators 26 verbunden ist, während sein anderer auf die Anode der Diode 22 führt, deren Kathode am negativen Punkt 18 angeschlossen ist. Die vom Kondensator gespeiste Last, in Figur 1 die Steuervorrichtung 30, ist lediglich parallel zu diesem anzuschliessen, d.h. zwischen dem positiven Punkt 16 und dem zwischen Kondensator und Diode angeordneten Knoten.

Grundsätzlich kann neben NiCd auch jede Akkumulator- bzw. Zellensorte verwendet werden.

Obwohl im gezeigten Beispiel von nur einer Akkuzelle ausgegangen wird, kann die erfindungsgemässe Lösung auch bei einem Akkumulator mit mehreren Zellen eingesetzt werden. Entscheidend ist, wie stark der Akkumulator im stark entladenen Zustand die von der Ladevorrichtung abgegebene Spannung herunterreisst und ob diese Spannung dann noch ausreicht, um eine weitere Last zuverlässig zu speisen. Da die Gesamtspannung von mehreren Zellen im Zustand der Tiefentladung sehr klein sein und zur Speisung eines elektronischen Schaltkreises nicht mehr ausreichen kann, ist der Einsatz der erfindungsgemässen Lösung auch hier gleichermassen vorteilhaft. Da die Gesamtspannung eines Akkumulators mit zahlreichen Zellen im Zustand vollständiger Entladung Null betragen kann, ist die Lösung gemäss der Erfindung unabhängig der Zellenzahl sehr vorteilhaft.

Von zentraler Bedeutung sind
- die Funktion des Kondensators als Kurzzeit-Energiespeicher,
- die Diode als Mittel zum Schutz vor ungewünschter Entladung des Kondensators und
- das zyklische, kurzzeitige Unterbrechen des Akku-Ladevorganges zwecks Entlastung der einen relativ hohen Innenwiderstand aufweisenden Ladevorrichtung.

## Patentansprüche

1. Akkumulator-betriebenes Gerät (10) mit einem aus mindestens einer Zelle bestehenden Akkumulator (12), wobei
- dem Gerät (10) eine Ladevorrichtung mit einer elektrischen Energiequelle (14) zugeordnet ist, die im Gerät (10) zwischen zwei Punkten (16,18) mindestens zeitweise eine lastabhängige Spannung (U1) erzeugt, und
- der Akkumulator (12) für die elektrische Energiequelle (14) eine erste Last bildet,
**dadurch gekennzeichnet,**
- **dass** der Akkumulator (12) mit einem ersten Schaltmittel (20) eine erste Serieschaltung (21) bildet, die zwischen den Punkten (16,18) angeordnet ist,
- **dass** ein Gleichrichterelement (22) und ein Kondensator (26) eine zweite Serieschaltung (27) bilden, die ebenfalls zwischen den beiden Punkten (16, 18) angeordnet ist, wobei das Gleichrichterelement (22) in Bezug auf die Spannung (U1) in Durchlassrichtung angeordnet ist und zwischen dem Gleichrichterelement (22) und dem Kondensator (26) ein Knoten (24) definiert ist,
- **dass** eine gegenüber der ersten Last hochohmigere, zweite Last (30) mit dem Knoten (24) und mindestens einem der Punkte (16,18) in Verbindung steht und
- **dass** ein Steuermittel (30) zum zyklischen Schalten des ersten Schaltmittels (20) vorgesehen ist, um alternierend im Einschaltzustand den Ladevorgang des Akkumulators (12) und im Ausschaltzustand den Ladevorgang des Kondensators (26) zu ermöglichen.

2. Akkumulator-betriebenes Gerät (10) nach Anspruch 1, **dadurch gekennzeichnet, dass** die zweite Last (30) eine elektronische Schaltung bildet, deren erster Speiseanschluss (32) mit dem Knoten (24) und deren zweiter Speiseanschluss (34) mit einem ersten (18) der beiden Punkte (16, 18) verbunden ist.

3. Akkumulator-betriebenes Gerät (10) nach Anspruch 1 oder 2, **dadurch gekennzeichnet,**
- **dass** in Bezug auf die Spannung U1 ein erster (18) der Punkte (16,18) ein negatives Potential (-) und ein zweiter (16) dieser Punkte (16,18) ein positives Potential (+) aufweist und
- **dass** das Gleichrichterelement (22) eine Diode umfasst, deren Anode mit dem zweiten Punkt (16) und deren Kathode mit dem Knoten (24) verbunden ist.

4. Akkumulator-betriebenes Gerät (10) nach Anspruch 1, 2 oder 3, **dadurch gekennzeichnet, dass** eine dritte Last (50) mit einem zweiten Schaltmittel (48) eine dritte Serieschaltung (51) bildet, die mit dem Akkumulator (12) verbunden ist.

5. Akkumulator-betriebenes Gerät (10) nach Anspruch 4, **dadurch gekennzeichnet, dass** die dritte Last (50) ein Motor ist.

6. Akkumulator-betriebenes Gerät (10) nach einem der vorangehenden Ansprüche, **dadurch gekennzeichnet, dass** das erste und das zweite Schaltmittel (20, 48) MOS-Feldeffekt-Transistor sind.

7. Akkumulator-betriebenes Gerät (10) nach einem der vorangehenden Ansprüche, **dadurch gekennzeichnet, dass** der Akkumulator (12) nur eine Zelle aufweist.

8. Akkumulator-betriebenes Gerät (10) nach einem der vorangehenden Ansprüche, **dadurch gekennzeichnet, dass** die Ladevorrichtung sowie das Gerät (10) Mittel zur induktiven Übertragung von Energie von der Ladevorrichtung zum Gerät (10) aufweisen.

9. Akkumulator-betriebenes Gerät (10) nach einem der vorangehenden Ansprüche, **dadurch gekennzeichnet, dass** eine Rückführung vom Akkumulator (12) über einen Aufwärtswandler (40) zum Knoten (24) vorgesehen ist.

10. Akkumulator-betriebenes Gerät (10) nach einem der vorangehenden Ansprüche, **dadurch gekennzeichnet, dass** es (10) ein Gerät aus der Gruppe ist, die elektrische Zahnplegegeräte, elektrische Zahnbürsten und elektrische Rasierapparate umfasst.

11. Akkumulator-betriebenes Gerät (10) nach einem der vorangehenden Ansprüche, **dadurch gekennzeichnet, dass** die Spannung (U1) im wesentlichen einen konstanten oder variablen Verlauf aufweist.

12. Verfahren für ein Akkumulator-betriebenes Gerät (10) nach einem der vorangehenden Ansprüche, **dadurch gekennzeichnet,**
- **dass** sich die Spannung (U1) der elektrischen Energiequelle (14) im Einschaltzustand des ersten Schaltmittels (20) dem Ladezustand des Akkumulators (12) anpasst und
- **dass** die Spannung (U1) der elektrischen Energiequelle (14) im Unterbruchszustand des ersten Schaltmittels (20) demgegenüber höher ausfällt und über das Gleichrichterelement (22) den Kondensator (26) ladet.

13. Verfahren nach Anspruch 12, **dadurch gekennzeichnet, dass** die Einschaltdauer (t1) des ersten Schaltmittels (20) die Unterbruchsdauer (t2) um ein Vielfaches übertrifft.

14. Verfahren nach Anspruch 13, **dadurch gekennzeichnet, dass** die Einschaltdauer (t1) des ersten Schaltmittels (20) Bruchteile von Sekunden dauern kann, während die Unterbruchsdauer (t2) nur in der Grössenordnung von Millisekunden liegt.

## Claims

1. Battery operated apparatus (10) with a battery (12) consisting of at least one cell, wherein
- to the apparatus (10) there is allocated a charging device with an electrical energy source (14) which in the apparatus (10) between two points (16, 18) at least at times produces a load-dependent voltage (U1), and
- the battery for the electrical energy source (14) forms a first load,
**characterised in that**
- the battery (12) with a first switch means forms a first series circuit (21) which is arranged between the points (16, 18),
- that a rectifier element (22) and a capacitor (26) form a second series circuit (27) which likewise is arranged between the two points (16, 18), wherein the rectifier element (22) with respect to the voltage (U1) is arranged in the forward direction and between the rectifier element (22) and the capacitor (26) there is defined a node (24),
- that a second load (30) which has a higher impedance with respect to the first load is in contact with the node (24) and at least one of the points (16, 18) and
- that there is provided a control means (30) for the cyclical switching of the first switch means (20) in order to alternately permit in the switched on condition the charging procedure of the battery (12) and in the switched off condition the charging procedure of the capacitor (26).

2. Battery operated apparatus (10) according to claim 1, **characterised in that** the second load (30) forms an electronic circuit, whose first supply connection (32) is connected to the node (24) and whose second supply connection (34) is connected to a first (18) of the two points (16, 18).

3. Battery operated apparatus (10) according to claim 1 or 2,
**characterised in that**
- with respect to the voltage U1 a first (18) of the points (16, 18) has a negative potential (-) and a second (16) of these points has a positive potential (+) and
- that the rectifier element (22) comprises a diode, whose anode is connected to the second point (16) and whose cathode is connected to the node (24).

4. Battery operated apparatus (10) according to claim 1, 2 or 3, **characterised in that** a third load (50) with a second switch means (48) forms a third series circuit (51) which is connected to the battery (12).

5. Battery operated apparatus (10) according to claim 4, **characterised in that** the third load (50) is a motor.

6. Battery operated apparatus (10) according to one of the preceding claims, **characterised in that** the first and the second switch means (20, 48) are MOS field effect transistors.

7. Battery operated apparatus (10) according to one of the preceding claims, **characterised in that** the battery (12) only comprises one cell.

8. Battery operated apparatus (10) according to one of the preceding claims, **characterised in that** the charging device as well as the apparatus (10) comprise means for the inductive transmission of energy from the charging device to the apparatus (10).

9. Battery operated apparatus (10) according to one of the preceding claims, **characterised in that** a feedback from the battery (12) to the node (24) via a step-up transducer (40) is provided.

10. Battery operated apparatus (10) according to one of the preceding claims, **characterised in that** it (10) is an apparatus from the group which comprises electrical tooth-care apparatus, electrical toothbrushes and electrical shaving apparatus.

11. Battery operated apparatus (10) according to one of the preceding claims, **characterised in that** the voltage (U1) essentially has a constant or variable course.

12. Method for operating a battery operated apparatus (10) according to one of the preceding claims, **characterised in that**
- the voltage (U1) of the electrical energy source (14) in the switched on condition of the first switch means (20) adapts to the charged condition of the battery (12) and
- that the voltage (U1) of the electrical energy source (14) in the interruption condition of the first switch means (20) in contrast turns out higher and via the rectifier element (22) charges the capacitor (26).

13. Method according to claim 12, **characterised in that** the switch-on duration (t1) of the first switch means (20) exceeds the interruption duration (t2) many times.

14. Method according to claim 13, **characterised in that** the switch-on duration (t1) of the first switch means (20) may last from fractions of seconds, whilst the interruption duration (t2) only lies in the order of milliseconds.

## Revendications

1. Appareil fonctionnant sur batterie (10) avec une batterie (12) comprenant au moins une cellule, pour lequel
- à l'appareil est affecté un dispositif de charge avec une source d'énergie électrique (14), qui produit au moins de temps en temps entre deux points (16, 18) une tension (U1) dépendant de la charge, et
- la batterie (12) pour la source d'énergie électrique (14) forme une première charge,
**caractérisé en ce que** la batterie (12) avec un premier moyen de commutation (20) forme un premier circuit série (21), qui est arrangé entre les points (16, 18),
**en ce qu'**un élément redresseur (22) et un condensateur (26) forment un second circuit série (27), qui est également arrangé entre les deux points (16, 18), pour lequel l'élément redresseur (22) est arrangé par rapport à la tension (U1) dans la direction de conduction, et un noeud (24) est défini entre l'élément redresseur (24) et le condensateur (26),
**en ce qu'**une seconde charge (30), d'une impédance plus grande par rapport à la première charge, est en contact avec le noeud (24) et au moins un des points (16, 18), et
**en ce qu'**un moyen de commande (30) est prévu pour la commutation cyclique du premier moyen de commutation (20) afin de permettre alternativement la procédure de charge de la batterie (12) dans l'état enclenché, et la procédure de charge du condensateur (26) dans l'état déclenché.

2. Appareil fonctionnant sur batterie (10) selon la revendication 1, **caractérisé en ce que** la seconde charge (30) forme un circuit électronique, dont la première connexion d'alimentation (32) est connectée au noeud (24), et dont la seconde connexion d'alimentation (34) est connectée à un premier (18) des deux points (16, 18).

3. Appareil fonctionnant sur batterie (10) selon l'une des revendications 1 et 2, **caractérisé en ce que** par rapport à la tension (U1), un premier (18) des points (16, 18) a un potentiel négatif (-) et un second (16) de ces points a un potentiel positif (+), et
**en ce que** l'élément redresseur (22) comprend une diode, dont l'anode est connectée au second point (16), et dont la cathode est connectée au noeud (24).

4. Appareil fonctionnant sur batterie (10) selon l'une des revendications 1 à 3, **caractérisé en ce qu'**une troisième charge (50) avec un second moyen de commutation (48) forme un troisième circuit série (51), qui est connecté à la batterie (12).

5. Appareil fonctionnant sur batterie (10) selon la revendication 4, **caractérisé en ce que** la troisième charge (50) est un moteur.

6. Appareil fonctionnant sur batterie (10) selon l'une des revendications précédentes, **caractérisé en ce que** les premier et second moyens de commutation (20, 48) sont des transistors MOS à effet de champ.

7. Appareil fonctionnant sur batterie (10) selon l'une des revendications précédentes, **caractérisé en ce que** la batterie (12) ne comprend qu'une cellule.

8. Appareil fonctionnant sur batterie (10) selon l'une des revendications précédentes, **caractérisé en ce que** le dispositif de charge, aussi bien que l'appareil (10), comprennent des moyens pour la transmission inductive d'énergie du dispositif de charge à l'appareil (10).

9. Appareil fonctionnant sur batterie (10) selon l'une des revendications précédentes, **caractérisé en ce qu'**une rétroaction de la batterie (12) au noeud (24) est prévue par l'intermédiaire d'un transformateur survolteur (40).

10. Appareil fonctionnant sur batterie (10) selon l'une des revendications précédentes, **caractérisé en ce qu'**il est un appareil (10) du groupe, qui comprend les appareils électriques de soin dentaire, des brosses à dents électriques et des rasoirs électriques.

11. Appareil fonctionnant sur batterie (10) selon l'une des revendications précédentes, **caractérisé en ce que** la tension (U1) présente essentiellement un cours constant ou variable.

12. Procédé de mise en fonction d'un appareil fonctionnant sur batterie (10) selon l'une des revendications précédentes,
**caractérisé en ce que** la tension (U1) de la source d'énergie électrique (14) s'adapte à l'état chargé de la batterie (12) dans l'état enclenché du premier moyen de commutation (20), et
**en ce que** la tension (U1) de la source d'énergie électrique (14) s'avère en revanche plus haute dans l'état d'interruption du premier moyen de commutation (20) et charge le condensateur (26) par l'intermédiaire de l'élément redresseur (22).

13. Procédé selon la revendication 12, **caractérisé en ce que** la durée d'enclenchement (t1) du premier moyen de commutation (20) dépasse de beaucoup de fois la durée d'interruption (t2).

14. Procédé selon la revendication 13, **caractérisé en ce que** la durée d'enclenchement (t1) du premier moyen de commutation (20) peut durer des fractions de secondes, tandis que la durée d'interruption (t2) est seulement de l'ordre de grandeur des millisecondes.
